# EUROPÄISCHE PATENTANMELDUNG

(11) **EP 2 308 314 A2**
(43) Veröffentlichungstag der Anmeldung: **13.04.2011**
(21) Anmeldenummer: 10162145.6
(22) Anmeldetag: 06.05.2010
(51) Int. Cl.: A22C 15/00

(54) **Aufhängevorrichtung zur Aufhängung von Würstchenketten**

(30) Priorität: 12.10.2009 DE 202009013829 U
(71) Anmelder: VEMAG Maschinenbau GmbH, 27283 Verden/Aller (DE)
(72) Erfinder: Knodel, Peter, 28876, Oyten (DE)
(74) Vertreter: Sendrowski, Heiko

(57) **Zusammenfassung**

Die Erfindung betrifft eine Vorrichtung und ein Verfahren zum Aufhängen von Würstchenketten (12) in Schlaufen, mit einer Führungs- und Antriebseinrichtung zum Führen und Antreiben von Haken (20) entlang einer Bewegungsbahn, welche ein antreibbares, umlaufendes Antriebselement (26; 126) zur beabstandeten Aufnahme und zum Antreiben mehrerer Haken (20) aufweist, und mit mehreren mit dem Antriebselement (26; 126) koppelbaren Haken (20) zum Tragen einer Schlaufe der Würstchenkette (12). Erfindungsgemäß ist eine Einrichtung (13) zum stufenlosen Fixieren der Haken (20) in verschiedenen Abständen zueinander an dem Antriebselement (26; 126) vorhanden.

## Beschreibung

Die Erfindung betrifft eine Aufhängevorrichtung nach dem Oberbegriff des Anspruchs 1.

Würstchen werden üblicherweise mit bekannten Wurstfüllmaschinen in Form langer portionierter Wurstketten hergestellt. Zwei benachbarte Wursthüllen sind dabei jeweils durch eine Abdrehstelle voneinander geteilt. Die gefüllten und abgeteilten Wursthüllen werden in Schlaufen gelegt und an eine im Stand der Technik bekannte Aufhängevorrichtung gehängt. Durch die Schlaufen der in der Aufhängevorrichtung hängenden Würste wird ein Rauchspieß oder Rauchstock hindurchgeschoben. Die Würstchenkette wird dann in dieser Form auf einen Rauchwagen gehängt, der anschließend in eine Räucherkammer gefahren wird.

Beim Räuchern der Würstchen kommt es entscheidend darauf an, dass sich die Würstchen nicht berühren. Andernfalls würden an den Berührungsstellen helle Flecken zurückbleiben, die nicht nur das Äußere der Würstchen ungünstig beeinflussen, sondern auch deren Haltbarkeit herabsetzen. Deshalb weisen Aufhängevorrichtungen Haken in einem vordefinierten Abstand auf, so dass die Würstchen in Abstand voneinander aufgehängt werden können und sich nicht berühren. Bei bisher bekannten Aufhängevorrichtungen sind die Abstände der Haken in einer vordefinierten Teilung fest vorgegeben.

Würste weisen jedoch unterschiedliche Dicke (Kaliber) auf, so dass bei bekannten Aufhängevorrichtungen entweder ein unnötig großer Abstand zwischen den Würstchen vorhanden ist oder beispielsweise nur jeder zweite Haken verwendet werden kann, weil sonst die Würstchen aneinanderstoßen würden. Dies hat zur Folge, dass eine Räucherkammer nicht immer die optimale, d.h. maximal mögliche Anzahl von Würstchen aufnehmen kann.

Aufgabe der vorliegenden Erfindung ist es, eine Aufhängevorrichtung anzugeben, bei der eine einfache Anpassung an unterschiedliche Würstchenlängen und Kaliber vorgenommen werden kann.

Erfindungsgemäß wird diese Aufgabe gelöst durch eine Vorrichtung zum Aufhängen von Würstchenketten in Schlaufen, mit einer Führungs- und Antriebseinrichtung zum Führen und Antreiben von Haken entlang einer Bewegungsbahn, welche ein antreibbares, umlaufendes Antriebselement zur beabstandeten Aufnahme und zum Antreiben mehrerer Haken aufweist, mit mehreren mit dem Antriebselement koppelbaren Haken zum Tragen einer Schlaufe der Würstchenkette und mit einer Einrichtung zum stufenlosen Fixieren der Haken in verschiedenen Abständen zueinander an dem Antriebselement.

Dies hat den Vorteil, dass die Abstände der Haken zueinander nicht durch die Aufhängevorrichtung vorgegeben sind, sondern so gewählt werden können, dass benachbarte Würstchen mit optimalem Abstand hängen können. Unter optimalen Abstand versteht man hier den geringst möglichen Abstand benachbarter Würstchen, bei dem sich die Würstchen gerade nicht mehr berühren, um ein gutes Räucherergebnis zu erhalten, so dass die maximal mögliche Anzahl der Würstchen eines Kalibers in einer Aufhängevorrichtung und somit in einer Räucherkammer aufgenommen werden kann.

Bei einer bevorzugten Ausführungsform weist die Einrichtung zum stufenlosen Fixieren ein an einem Haken drehbar gelagertes Zahnrad auf, dessen Zähne mit korrespondierenden Ausnehmungen in dem Antriebselement in Eingriff stehen und welches an einer Drehung durch eine Feststelleinrichtung gehindert werden kann. Somit können die Haken bei gelöster Feststelleinrichtung einerseits verschoben werden, aber andererseits wird bei aktivierter Feststelleinrichtung verhindert, dass sich die positionierten Haken versehentlich verschieben.

Es ist von Vorteil, wenn das einem Haken zugeordnete Zahnrad an einem Befestigungsabschnitt des Hakens drehbar gelagert ist und die Drehachse des Zahnrades im montierten Zustand im Wesentlichen vertikal angeordnet ist. Dies ermöglicht ein besonders einfaches Verschieben der Haken entlang einer Führung- und Antriebseinrichtung der Aufhängevorrichtung.

Weiterhin ist bevorzugt, dass die Feststelleinrichtung einen mit einem Zahnrad kooperierenden Bolzen aufweist, welcher ein Gewinde aufweist und mittels einer Mutter an einem Befestigungsabschnitt eines Hakens fixierbar ist. Auf diese Weise wird ein besonders einfaches Fixieren des Hakens gewährleistet, um ein versehentliches Verschieben des Hakens zu vermeiden.

Bei einer bevorzugten Ausführungsform ist der Befestigungsabschnitt eines Hakens in einer Seitenansicht im Wesentlichen U-förmig, und die freien Schenkel des U-förmigen Abschnitts wirken mit einer Führungsschiene der Führungs- und Antriebseinrichtung zusammen, um die Haken entlang ihrer Bewegungsbahn führen zu können. Diese Art des Befestigungsabschnitts hat den Vorteil, dass sie einfach herstellbar ist.

Bei einer besonders einfach herstellbaren bevorzugten Ausführungsform der Aufhängevorrichtung weist die Führungsschiene mindestens ein im Wesentlichen vertikal angeordnetes Blech auf, entlang welchem die Haken gleiten können.

Es ist bevorzugt, dass das umlaufende Antriebselement als Zahnriemen oder Kette ausgebildet ist und das Zahnrad mit Zähnen des Zahnriemens bzw. Ausnehmungen in der Kette formschlüssig in Eingriff steht.

(Anspruch 9) Vorteilhaft ist eine erfindungsgemäße Aufhängevorrichtung mit einem Haken, der beweglich ist, so dass der Haken in Bezug auf das Antriebselement in mindestens zwei Stellungen verstellbar ist. Mittels dieser erfindungsgemäßen Ausführungsform ist der Haken auf einfache und schnelle Weise aus einer ersten Stellung in mindestens eine zweite Stellung verstellbar. Der Haken befindet sich in der ersten Stellung, sofern er nicht betätigt wird, und ist in dieser Stellung nicht entlang des Antriebselements verschiebbar. Durch eine vorgesehene kurze rotatorische oder translatorische Bewegung des Hakens relativ zum Antriebselement wird der Haken in eine mindestens zweite Stellung gebracht, in der er entlang des Antriebselements frei verschiebbar und auf dem Antriebselement neu positionierbar ist. Die Bewegung ist vorteilhafterweise auch manuell ohne größeren Kraftaufwand und mit wenigen Schritten ausführbar.

(Anspruch 10) Eine weitere vorteilhafte erfindungsgemäße Ausführungsform der Aufhängevorrichtung enthält einen Haken, der um eine Achse schwenkbar an einem Befestigungsabschnitt gelagert ist. Vorzugsweise verläuft die Achse im Wesentlichen parallel zum Antriebselement. Auf diese Weise ist eine Aufhängevorrichtung realisierbar, die das Verstellen des Hakens in die zweite Stellung besonders einfach ermöglicht. Diese Ausführungsform ermöglicht dem Anwender die Hakenstellung mit geringem Aufwand zwischen den mindestens zwei Stellungen durch eine einfache Verschwenkung zu verändern.

(Anspruch 11) Mittels einer erfindungsgemäßen Ausführungsform der Aufhängevorrichtung mit einem Haken, der in einer ersten Stellung fest mit einem ersten Abschnitt des Antriebselements gekoppelt ist und in eine zweite Stellung bewegbar oder schwenkbar ist, in welcher der Haken von dem Antriebselement entkoppelt und relativ zu diesem verschiebbar ist, wird auf zuverlässige Weise die Kraftübertragung von dem Antriebselement auf den Haken erreicht. In der ersten Stellung des Hakens, welche die Ruhestellung des Hakens darstellt, wird die Antriebskraft sowohl auf das Befestigungselement als auch auf den Haken übertragen, wodurch der Haken auch bei schwereren Lasten rutschfrei angetrieben werden kann.

Bevorzugterweise greift der Haken in der ersten Stellung mittels einer Nut in einem ersten Abschnitt des Antriebselements ein, wohingegen auf einen zweiten Abschnitt des Antriebselements der Befestigungsabschnitt mittels einer Nut mit dem Antriebselement gekoppelt ist. In einer vertikalen Ausrichtung des Antriebselements befindet sich der erste Abschnitt auf der unteren und der zweite Abschnitt auf der oberen Seite des Antriebselements. Die Nuten des Befestigungsabschnitts und des Hakens umschließen mit ihren Seitenwänden jeweils den ersten und zweiten Abschnitt des Antriebselements, der einen permanenten Kraftschluss zwischen dem Haken, Befestigungsabschnitt und dem Antriebselement aufrechterhält. Die Anordnung des Hakens an einem Befestigungselement und der Kraftschluss mit dem Antriebselement sichert die Position des Hakens auf dem Antriebselement und macht eine separate Sicherungsvorrichtung überflüssig.

Bevorzugterweise weist der Befestigungsabschnitt zwei rechtwinklig zueinander angeordnete Schenkel auf, dessen erster Schenkel eine Nut und ein Zahnrad enthält und im Wesentlichen vertikal, parallel und benachbart zum Antriebselement positioniert ist, und zwei Seitenwände enthält, zwischen denen der Haken mittels mindestens einer Lagerung in der Seitenwand schwenkbar gelagert ist. Mittels dieser Ausführungsform wird auf eine besonders einfache und sichere Weise eine Schwenkbarkeit des Hakens erreicht. Zusätzlich zur Lagerung unterstützen die Seitenwände des Befestigungsabschnitts die bevorzugte senkrechte Ausrichtung des Hakens zum Antriebselement. Insbesondere bei der Schwenkung des Hakens zwischen den mindestens zwei Stellungen halten die Seitenwände den Haken stets in der senkrechten Ausrichtung zum Antriebselement. Der Haken wird dadurch auf einer vorgesehenen Bewegungsbahn relativ zum Antriebselement verschwenkt. Zudem ist der Haken in der zweiten Stellung relativ zum Antriebselement verschiebbar und bleibt gleichzeitig mittels des Befestigungsabschnitts mit dem Antriebselement gekoppelt. Auch wenn der Haken in der zweiten Stellung von dem Antriebselement gelöst wird, behält er eine definierte Stellung relativ zum Antriebselement. Der Haken ist somit vorteilhaft mit geringer Präzision einhändig zwischen den mindestens zwei Stellungen verschwenkbar. Beim waagerechten Verlauf des Antriebselements ergibt sich eine aus ergonomischen Gesichtspunkten vorteilhafte Schwenkbewegung des Hakens, in der das Handgelenk vertikal gehalten werden kann.

Bevorzugt ist auch eine erfindungsgemäße Ausführungsform der Aufhängevorrichtung, dessen Antriebselement mit einer Vielzahl von Gleitführungsgliedern versehen ist, die jeweils auf einem ersten und einem zweiten Abschnitt des Antriebselements zum Führen des Hakens und des Befestigungsabschnitts schienenartig entlang ihrer Längsachse aneinandergereiht sind. Die Gleitführungsglieder enthalten ein Befestigungshülse zum Koppeln mit dem Antriebselement und einen schienenartigen Führungsschuh, der an der Befestigungshülse angeformt ist. Die Führungsschuhe sind so ausgebildet, dass die Nuten des Befestigungsabschnitts mit der Nut der Führungsschuhe in Eingriff bringbar sind. Die Gleitführungsglieder sind beliebig austauschbar und sind entsprechend zu der Ausbildung der Haken auswählbar. Somit wird sichergestellt, dass die unterschiedliche Typen von Aufhängevorrichtungen variabel an der Führungs- und Antriebseinrichtung einsetzbar sind.

Ferner ist eine erfindungsgemäße Ausführungsform der Aufhängevorrichtung bevorzugt, dessen Haken mittels einer Feder in der ersten Stellung gehalten wird.

Bevorzugt ist weiterhin eine Ausführungsform der Aufhängevorrichtung mit einem Federelement, das innerhalb einer im Wesentlichen horizontal verlaufenden Bohrung im Befestigungsabschnitt eingebaut ist, die zur Antriebselement distalen Seite des Befestigungsabschnitts hin offen ist.

Mittels einer weiteren erfindungsgemäßen Ausführungsform der Aufhängevorrichtung, dessen Haken mit einem im Wesentlichen vertikalen Ansatz versehen ist, an dem das Federelement andrückt, wird auf günstige und einfache Weise erreicht, dass der Haken in der ersten Stellung verbleibt, sofern kein äußeres Moment als die der Federkraft um die Schwenkachse auf den Haken einwirkt. Ferner ist eine erfindungsgemäße Ausführungsform denkbar, die einen Haken enthält, der mittels einer konzentrisch zur Schwenkachse ausgerichteten Spiralfeder in der ersten Position gehalten wird.

Eine weitere vorteilhafte Ausführungsform der Aufhängevorrichtung ist dadurch gekennzeichnet, dass der Haken in der ersten Stellung die Drehung eines an dem Befestigungsabschnitt drehbar gelagerten Zahnrades verhindert und in der zweiten Stellung die Drehung des Zahnrades freigibt. Auf diese Weise ist die Verschiebung des Hakens in der zweiten Stellung besonders stabil ausführbar. Das Zahnrad befindet sich sowohl in der ersten als auch in der mindestens zweiten Stellung des Hakens im Eingriff mit dem Antriebselement. In der blockierten Stellung des Zahnrades wird die Antriebskraft vom Antriebselement auch über das Zahnrad auf den Befestigungsabschnitt und dem Haken übertragen. In der zweiten Stellung des Hakens, wenn die Drehung des Zahnrads freigegeben ist und der Haken entlang des Antriebselements verschoben werden soll, bewirkt das Zahnrad, dass der der Haken gemeinsam mit dem Befestigungsabschnitt stets parallel zum Antriebselement verschoben wird und die Spur beibehält.

Weiterhin ist eine erfindungsgemäße Ausführungsform der Aufhängevorrichtung bevorzugt, dessen Haken an einem Anschlag ausrichtbar ist. Mittels des Anschlags ist der Haken auf dem Antriebselement präzise einstellbar ohne Messwerkzeuge oder dergleichen benutzen zu müssen.

Besonders bevorzugt ist eine erfindungsgemäße Ausführungsform der Aufhängevorrichtung mit einem Anschlag, der in eine Position verfahrbar ist, in welcher der Haken an dem Anschlag ausrichtbar ist oder der Anschlag so positioniert ist, dass der Haken in der zweiten Stellung an dem Anschlag ausrichtbar ist. Auf diese Weise ist der Haken besonders effizient entlang des Antriebselements einstellbar. Zum Positionieren des Hakens an einer bestimmten Stelle am Antriebselement genügt es, den Haken in die zweite Stellung zu bewegen und anschließend am Anschlag auszurichten. Befindet sich der Haken wieder in der ersten Stellung, kann er ohne weitere Einstellungen am Anschlag vorbeigeführt werden. Denkbar wäre auch eine Ausführungsform, in welcher der Anschlag nach dem Ausrichten des Hakens in eine Position verfahren wird, in der er sich nicht mehr mit dem Haken überkreuzt. Insbesondere bei Haken, die nur relativ zum Antriebselement bewegbar sind, bietet der Anschlag eine vorteilhafte Vorrichtung zum schnellen Ausrichten der Haken.

Ein weiterer Aspekt der Erfindung betrifft ein Verfahren zum Einstellen einer Vorrichtung zum Aufhängen von Würstchenketten, welche eine Führungs- und Antriebseinrichtung zum Führen und Antreiben von Haken entlang einer Bewegungsbahn mit einem umlaufenden Antriebselement zur beabstandeten Aufnahme von Haken und mehrere mit dem Antriebselement koppelbare Haken zum Tragen einer Schlaufe einer Würstchenkette oder dergleichen aufweist, mit den Verfahrensschritten:
a) Positionieren eines Anschlags in einer Referenzposition,
b) Verstellung eines Hakens in eine zweite Stellung, in welcher der Haken von dem Antriebselement entkoppelt und relativ zum Antriebselement verschiebbar ist,
c) Verschieben des Hakens bis zum Anschlag,
d) Verstellen des Hakens in eine erste Stellung, in welcher der Haken fest mit dem Antriebselement gekoppelt ist, und
e) Verfahren des Hakens in Antriebsrichtung um eine Sollstrecke vorbei am Anschlag.

Mittels dieses Verfahrens kann besonders schnell und sicher eine Führungs- und Antriebseinrichtung mit einem Haken ausgestattet werden. Die Einstellung der Haken an der Führungs- und Antriebseinrichtung ist sowohl manuell durch einen Werkstätigen als auch maschinell ausführbar. Vorteilhaft ist insbesondere die Ausführung des Verfahrens mit einer Aufhängevorrichtung der bisher beschriebenen Art.

Besonders vorteilhaft ist das erfindungsgemäße Verfahren mit einem Anschlag, der mittels einer Steuerungs- und Antriebseinrichtung automatisch in die Referenzposition verfahrbar ist.

Mittels des vorteilhaften erfindungsgemäßen Verfahrens, in der überzählige Haken von der Führungs- und Antriebseinrichtung nach Verstellung des Hakens in die zweite Stellung entnommen, oder fehlende Haken an das Antriebselement in der zweiten Stellung hinzugefügt werden, erreicht man eine besonders schnelle und einfache Bestückung der Führungs- und Antriebseinrichtung mit der gewünschten Anzahl von Haken zum Aufhängen der Wurstkette.

Anhand eines bevorzugten erfindungsgemäßen Verfahrens, das durch Wiederholung der oben genannten Verfahrensschritte für weitere Haken gekennzeichnet ist, erreicht man auf besonders effiziente Weise die Ausstattung der Führungs- und Antriebseinrichtung mit einer großen Anzahl von Haken, die sich in einem definierten Abstand zueinander befinden.

Vorteilhafte Ausführungsbeispiele der Erfindung werden anhand der beigefügten Zeichnungen beschrieben, in denen zeigen:
- Figur 1:: eine Maschine zur Herstellung von Wurstwaren bestehend aus einer Füll- maschine, einem Vorsatzgerät und einer Aufhängevorrichtung in Seitenan- sicht;
- Figur 2a:: einen Ausschnitt der Aufhängevorrichtung der Figur 1 in einer Seitenansicht mit einem ersten Hakenabstand;
- Figur 2b:: einen Ausschnitt der Aufhängevorrichtung der Figur 1 in einer Seitenansicht mit einem zweiten Hakenabstand;
- Figur 3:: einen perspektivischen Ausschnitt einer Aufhängevorrichtung gemäß einer ersten bevorzugten Ausführungsform der Erfindung;
- Figur 4: eine Draufsicht auf eine Aufhängevorrichtung gemäß einer ersten bevorzug- ten Ausführungsform der Erfindung;
- Figur 5: eine Seitenansicht eines Hakens der Aufhängevorrichtung gemäß einer ersten bevorzugten Ausführungsform der Erfindung;
- Figur 6a:: einen Ausschnitt einer Aufhängevorrichtung gemäß einer ersten bevorzug- ten Ausführungsform der Erfindung mit zwei Haken in einem ersten Abstand in einer Draufsicht;
- Figur 6b:: einen Ausschnitt einer Aufhängevorrichtung gemäß einer ersten bevorzug- ten Ausführungsform der Erfindung mit zwei Haken in einem zweiten Ab- stand in einer Draufsicht;
- Figur 7a:: eine Möglichkeit zur Verstellung des Abstands zweier Haken ;
- Figur 7b:: eine weitere Möglichkeit zur Verstellung des Abstands zweier Haken;
- Figur 8:: einen perspektivischen Ausschnitt einer Aufhängevorrichtung gemäß einer zweiten bevorzugten Ausführungsform der Erfindung mit einer antreibbaren Kette;
- Figur 9a: einen perspektivischen Ausschnitt der schwenkbaren Aufhängevorrichtung gemäß einem weiteren bevorzugten Ausführungsbeispiel der Erfindung in einer nicht verschwenkten ersten Stellung;
- Figur 9b: einen vergrößerten Ausschnitt einer Aufhängevorrichtung aus Figur 9a;
- Figur 10a:: einen perspektivischen Ausschnitt einer schwenkbaren Aufhängevorrichtung gemäß dem weiteren bevorzugten Ausführungsbeispiel der Erfindung in ei- ner verschwenkten zweiten Stellung;
- Figur 10b:: einen vergrößerten Ausschnitt einer Aufhängevorrichtung aus Figur 10a;
- Figur 11a: eine Schnittansicht der Aufhängevorrichtung in der ersten Stellung; und

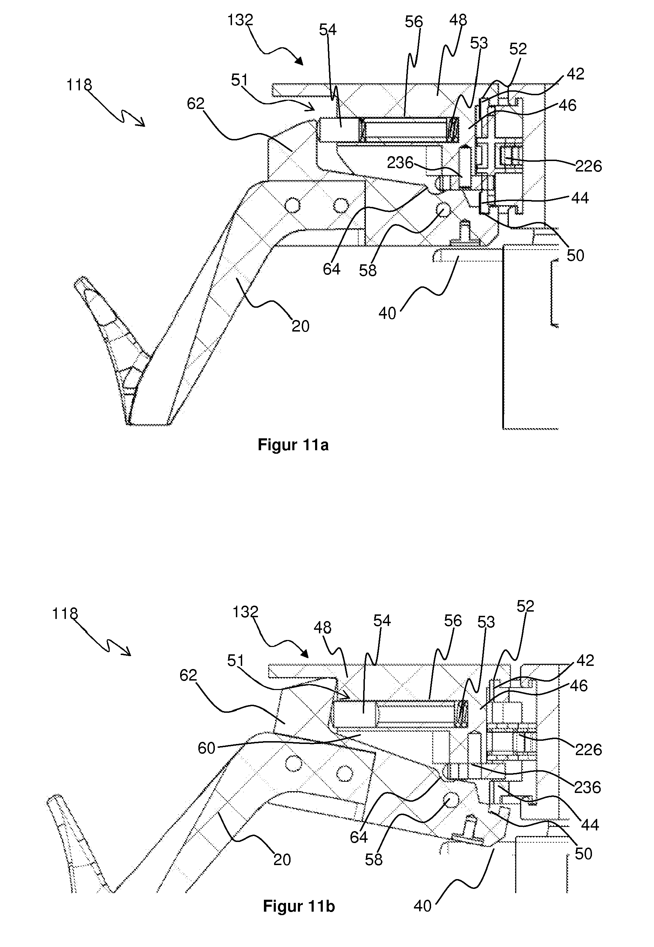

- Figur 11: b eine Schnittansicht der Aufhängevorrichtung in der zweiten Stellung.

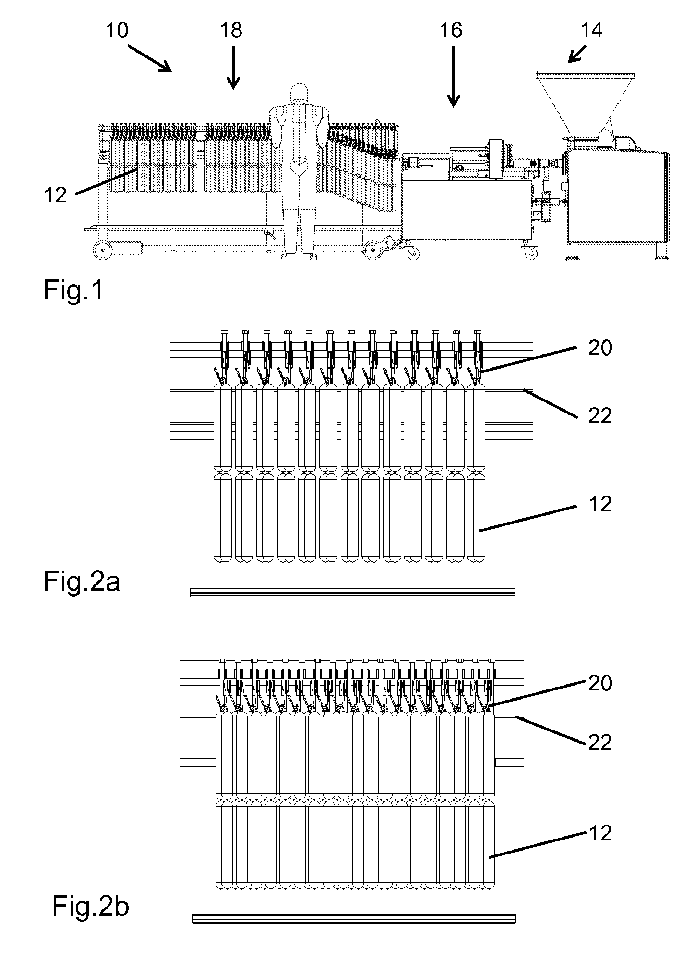

Figur 1 zeigt eine Maschine 10 zur Herstellung und Verarbeitung von Wurstwaren 12 bestehen aus einer Füllmaschine 14, einem Vorsatzgerät 16 und einer Aufhängevorrichtung 18.

Die Wurstmasse wird in bekannter Weise in der Füllmaschine 14 in eine Wursthülle gefüllt und abgeteilt. Anschließend werden die gefüllten und abgeteilten Wursthüllen in der Aufhängevorrichtung 18 an einer Schlaufe frei hängend nebeneinander aufgehängt. Hierfür sind wie in den Figuren 2a und 2b dargestellt an der Aufhängevorrichtung 18 Haken 20 vorgesehen, an den die Würste 12 aufgehängt werden können.

Die Figuren 2a und 2b zeigen die Haken mit jeweils einem nicht optimalen, weiten, von einer Aufhängevorrichtung vorgegebenen Hakenabstand und einem optimalen engen Abstand. Ein Rauchspieß 22 kann durch die Schlaufen der Würste 12 hindurchgeführt werden, um die Würste aus der Aufhängevorrichtung herauszunehmen und in einen Rauchwagen für ein Räuchern in einer Räucherkammer zu hängen.

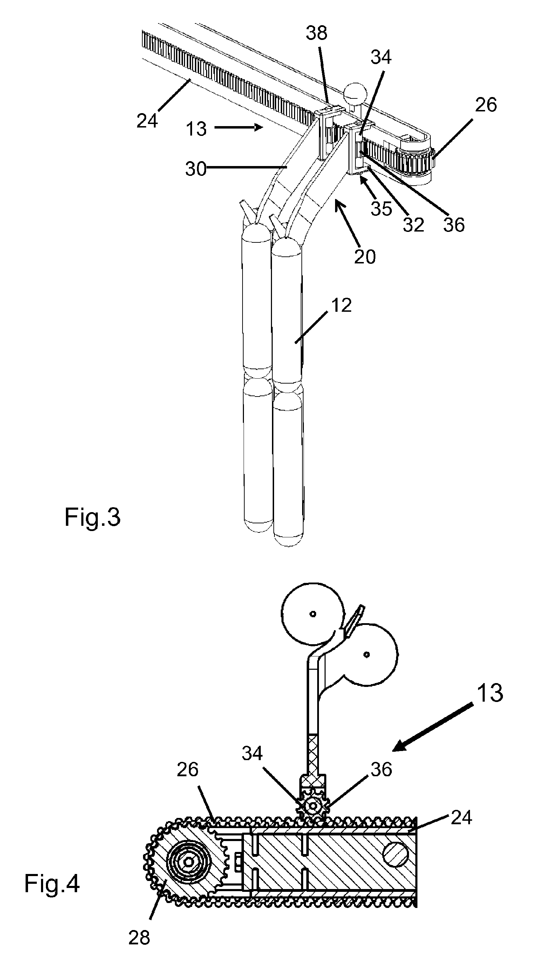

In Figur 3 ist ein Ausschnitt einer Aufhängevorrichtung gemäß einer bevorzugten Ausführungsform der Erfindung dargestellt. Entlang einer Führungsschiene 24, die hier in Form von vertikalen Blechen ausgebildet ist, ist ein Zahnriemen 26 angeordnet. Der Zahnriemen 26 wird von einem in Figur 4 dargestellten Antriebsrad 28 angetrieben.

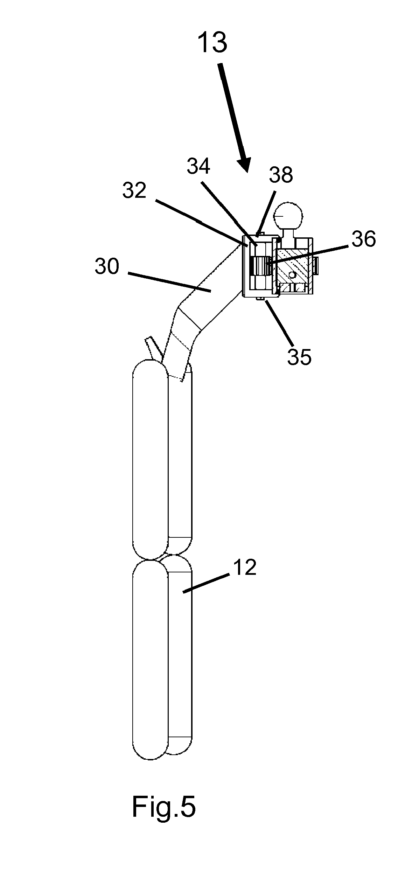

An der Führungsschiene 24 sind die Haken 20 angeordnet. Jeder Haken 20 weist einen Aufhängeabschnitt 30 für die Würste und einen Befestigungsabschnitt oder Gleiter 32 auf, wobei der Befestigungsabschnitt oder Gleiter 32 der Führungsschiene 24 zugewandt ist. Der Befestigungsabschnitt 32 ist wie insbesondere in Figur 5 zu sehen als U-förmiger Gleiter ausgebildet, dessen Schenkel mit der Führungsschiene 24 zusammenwirken. Der Befestigungsabschnitt bzw. Gleiter 32 kann entlang der Führungsschiene 24 verschoben werden.

Zwischen den beiden Schenkeln des Befestigungsabschnitts oder Gleiters 32 befindet sich senkrecht zu diesen eine frei drehbare Welle 34. Um die Welle 34 ist ein Zahnrad 36 angeordnet und fest mit dieser verbunden. Das Zahnrad 36 greift in den Zahnriemen 26 ein. Zum Fixieren des Zahnrads 36 und somit des Hakens 20 am Zahnriemen 26 ist ein Bolzen 38 mit einem Gewinde vorgesehen, der mit der Welle 34 und somit mit dem Zahnrad 36 kooperiert und der mittels einer Mutter 35 an dem Gleiter 32 fixierbar ist.

Soll die Position eines Hakens 20 an der Führungsschiene 24 verändert werden, wird die Fixierung der Welle 34 gelöst, indem Mutter 35 und Bolzen 38 gelöst wird, so dass sich die Welle 34 und somit das Zahnrad 36 um ihre/seine frei Achse drehen kann. Der Gleiter 32 kann nun entlang der Führungsschiene 24 manuell verschoben werden, während gleichzeitig das Zahnrad 36 entlang des Zahnriemens 26 läuft. Befindet sich der Haken 20 an der gewünschten Position in der Führungsschiene, wird die Welle 34 wieder mittels des Bolzens 38 und der Mutter 35 fixiert. Ein Ritzel des Zahnrades 36 greift hierbei in eine Zahnlücke des Zahnriemens 26 ein.

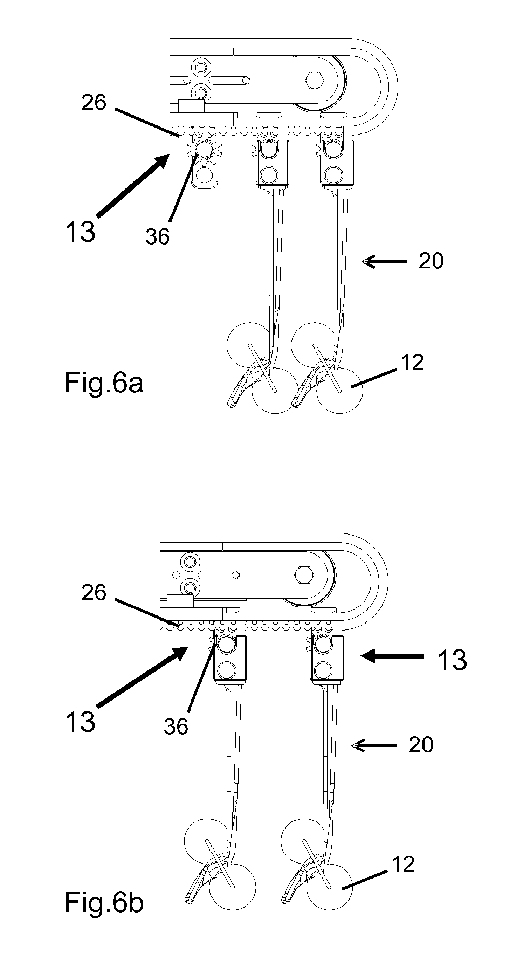

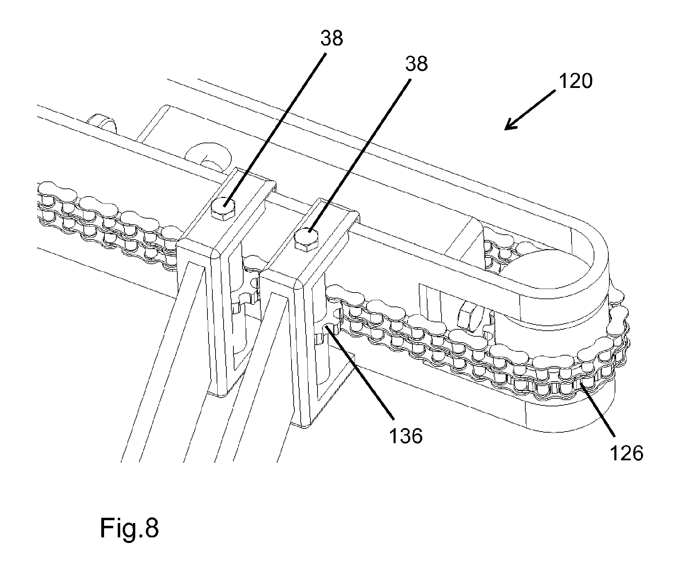

Mit Hilfe der erfindungsgemäßen Aufhängevorrichtung kann jeder Haken 20 nun mittels einer Einrichtung 13 an jeder beliebigen Stelle des Zahnriemens 26 stufenlos positioniert und fixiert werden, so dass der Abstand zweier Haken 20 durch das Kaliber der aufzuhängenden Würste vorgegeben und unabhängig von der Art des Aufhängesystems ist. Je nach Kaliber der aufzuhängenden Wurst kann der Abstand zweier Haken 20 wie in Figur 6a dargestellt gering oder wie in Figur 6b dargestellt groß sein. Durch Festziehen der Mutter 35 an Bolzen 38 wird ein Haken 20 in der eingestellten Position an dem Antriebselement 26 bzw. 126 (Figur 8) fixiert.

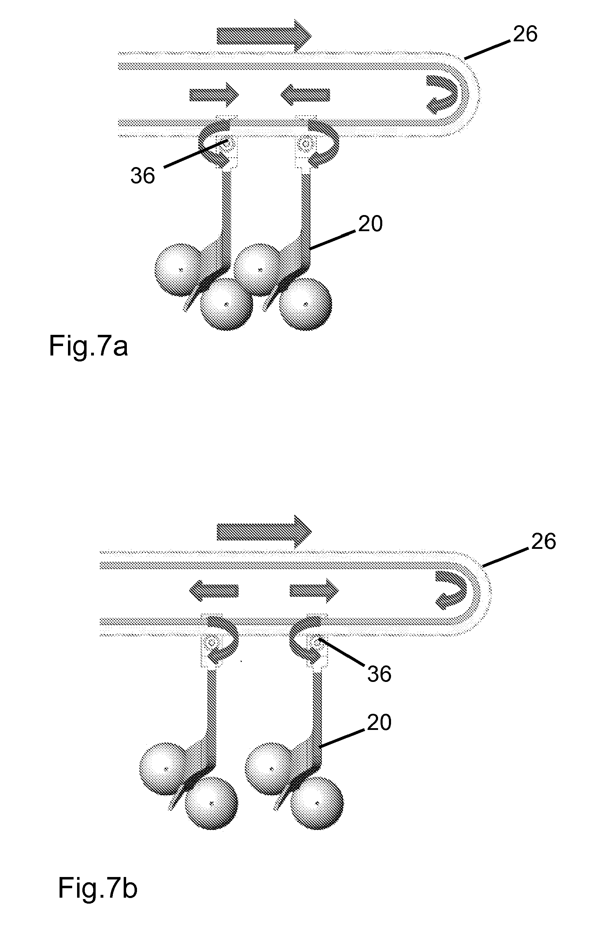

Jeder Haken 20 kann wie in den Figuren 7a und 7b zu sehen ist, sowohl in Laufrichtung des Zahnriemens 26 als auch entgegen der Laufrichtung des Zahnriemens verstellt werden, so dass zwei Haken 20 entweder aufeinander zu oder voneinander weg bewegt werden können.

Figur 8 zeigt eine alternative Ausführungsform einer Aufhängevorrichtung 120. Anstelle des Zahnriemens der ersten Ausführungsform wird hier eine Kette 126 mit Ausnehmungen verwendet, in die die Ritzel eines Zahnrads 136 eingreifen. Die Funktionsweise dieser Aufhängevorrichtung 120 unterscheidet sich nicht von der der ersten Ausführungsform.

Anstelle des Bolzens 38 ist selbstverständlich jede andere Art einer lösbaren Befestigung möglich.

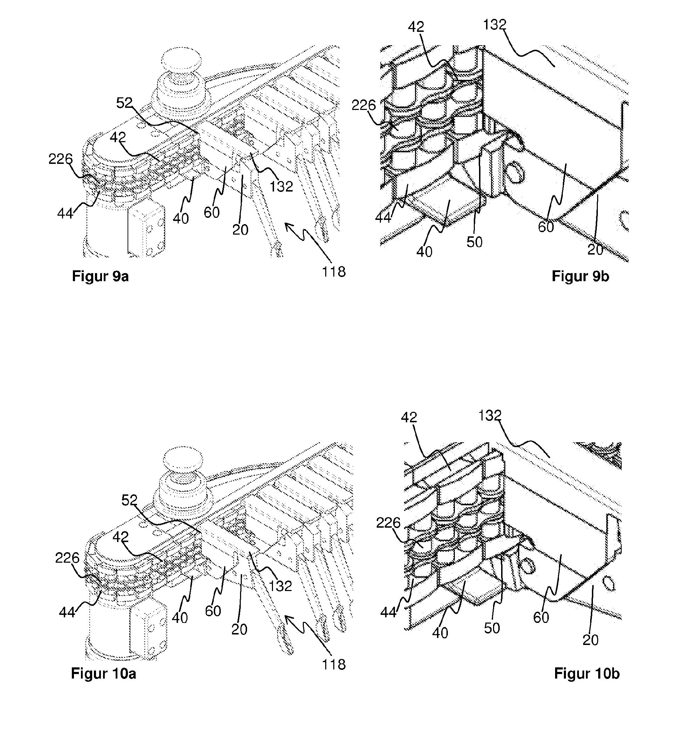

Figur 9a zeigt eine erfindungsgemäße schwenkbare Aufhängevorrichtung 118 an einer Führungs- und Antriebseinrichtung mit einem Antriebselement 226, woran ein Befestigungsabschnitt 132 mit einem Haken 20 eingehängt ist, der mittels eines Lagerungsstiftes 58 mit dem Befestigungsabschnitt gekoppelt ist. Eine detaillierte Ansicht des Zusammenbaus der Aufhängevorrichtung 118 ist in den Figuren 11a und 11b dargestellt.

Das Antriebselement 226 beinhaltet eine Kette, die an ihrer oberen und unteren Seite mittels einer Vielzahl von Gleitführungsliedern 42 und 44 bestückt ist. Die Gleitführungsglieder 42 und 44 sind jeweils zum Führen der Aufhängevorrichtung 118 schienenartig entlang ihrer Längsachse aneinandergereiht. Die Gleitführungsglieder 42, 44 weisen jeweils zwei Stelzen oder Befestigungshülsen zum Verbinden mit der Kette des Antriebselements 226 auf, worauf ein schienenartig ausgebildeter Gleitschuh aufgesetzt oder angeformt ist. Der Gleitschuh ist so ausgebildet, dass er mit den Nuten 50 und 52 des Befestigungsabschnitts 132 bzw. des Hakens 20 koppelbar ist. Das Antriebselement 226 ist sowohl in horizontaler Richtung als auch in eine zur Horizontalen hin geneigten Richtung verfahrbar, wie in den Figuren 9a und 10a dargestellt.

In der Schnittansicht aus den Figuren 11a und 11b ist der Befestigungsabschnitt 132 dargestellt, worin zwei rechtwinklig zueinander angeordnete Schenkel 48 und 46 zu sehen sind. Ein erster Schenkel 46 ist enthält eine Nut 52 und ein Zahnrad 236 und ist im Wesentlichen vertikal, parallel und benachbart zu dem Antriebselement 226 positioniert. Die Nut greift in einem Gleitführungsglied 42 des Antriebselements 226 ein und hält insbesondere die vertikale Position des Befestigungsabschnitts 132 aufrecht. Das Zahnrad 236 befindet sich am freien Ende des ersten Schenkels 46 und ist mittels eines vertikalen Lagerungsstifts am ersten Schenkel 46 drehbar gelagert. Das Zahnrad 236 ist an dem vertikalen Lagerungsstift drehbar gelagert und liegt mit einer Seitenfläche direkt an dem freien Ende des ersten Schenkels 46 an. Ferner greift das Zahnrad 236 seitlich in den unteren Abschnitt des Antriebselements 226 ein und erlaubt zusammen mit der Nut 52 die parallele Führung des Befestigungsabschnitts 132 entlang des Antriebselements 226. Das Zahnrad stützt den Befestigungsabschnitt 132 gegenüber dem Antriebselement 226 ab und hält es in der gewünschten horizontalen Position. Ein Absatz am freien Ende des zweiten Schenkels 48 des Befestigungsabschnitts 132 verjüngt die Wandstärke des zweiten Schenkels 48.

Ferner enthält der Befestigungsabschnitt 132 zwei Seitenwände 60, die an zwei Seiten von die Schenkeln 48 bündig umrandet sind und mit diesen zusammen einen Zwischenraum bilden. Die aus Sicht der Schenkel entfernte Kante der Seitenwände ist so angewinkelt, so dass die Seitenwand eine insgesamt dreieckige Form aufweist.

Eine Sacklochbohrung 56 ist innerhalb des zweiten Schenkels 48 auf Höhe des Absatzes eingebracht, die im Wesentlichen horizontal verläuft und zum Absatz hin offen ist. Innerhalb dieser Sacklochbohrung 56 befindet sich ein Federelement 51, das aus zwei Teilen aufgebaut ist. An eine Schraubenfeder 53 am Boden der Sacklochbohrung 56 schließt ein Druckaufnehmer 54 an. Der Durchmesser des Druckaufnehmers 54 entspricht dem Sacklochbohrungsdurchmesser und weist eine entsprechende Länge auf, um das Federelement 51 innerhalb der Sacklochbohrung zentriert anzuordnen. Die freie Kontaktfläche des Druckaufnehmers 54 weist eine leichte Wölbung auf.

Innerhalb des Zwischenraums des Befestigungsabschnitts 132, der durch dessen Seitenwände 60 gebildet wird, ist der Haken 20 mittels eines Lagerungsstiftes schwenkbar gelagert. Hierzu weist der Haken 20 im proximalen Bereich zum Antriebselement 226 eine Bohrung auf, in welche der Lagerungsstift eingreift. Ferner enthält der Haken 20 in diesem Bereich eine Nut 50 und eine gewölbte Aussparung. In der ersten Stellung des Hakens 20 befindet sich die Nut 50 mit dem unteren Abschnitt des Antriebselements 226 bzw. mit einem unteren Gleitführungsglied 44 im Eingriff. Die gewölbte Aussparung 64 ist derart ausgebildet, dass der Haken 20 in keiner Stellung mit der von dem Antriebselement 226 abgewandten Stirnseite des Zahnrades 236 kollidiert.

Im Bereich des Federelements des Befestigungsabschnitts 132 befindet sich ein Vorsprung 62 des Hakens 20, der mit dem Druckaufnehmer 54 des Federelements 51 interagiert. Der Vorsprung 62 des Hakens 20 ist so ausgebildet, dass die Kontaktfläche in der ersten Stellung des Hakens parallel zum Druckaufnehmer des Federelements 51 liegt. Es kann dadurch ein nahezu punktartiger Kontakt zwischen dem Scheitelpunkt des Druckaufnehmers und dem Ansatz des Hakens 20 entstehen. Der Punktkontakt zwischen diesen beiden Elementen geht in einen Flächenkontakt über, je mehr der Haken 20 verschwenkt wird.

Der Haken 20 ist zweistückig aufgebaut, bei der ein Teil den Hakenarm ausbildet, in der die Würste eingehängt werden, und das zweite Teil das Anschlussstück zur Kopplung mit dem Befestigungsabschnitt 132 und dem Antriebselement 226 bereitstellt. Die beiden Teilstücke des Hakens 20 sind mittels Bolzen miteinander verbunden. Denkbar wäre auch eine einstückige Ausbildung des Hakens.

Ein blechartig geformter Anschlag 40 ist unterhalb des Antriebselements 226 angeordnet. Der Anschlag 40 ist so positioniert, dass der Haken 20, sobald er sich in der zweiten Stellung befindet, am Anschlag 40 ausgerichtet werden kann, wie in Figur 10b vergrößert dargestellt. In der ersten Stellung jedoch überkreuzt die Bewegungsbahn des Hakens 20 den Anschlag 40 nicht, wie in den Figuren 9b und 11a dargestellt.

Zum Einstellen einer Vorrichtung zum Aufhängen von Würstchenketten wird zunächst der Anschlag 40 in eine Referenzposition verfahren. Anschließend wird der Haken 20 in eine zweite Stellung verstellt, in welcher die Nut 50 des Hakens 20 von dem Antriebselement 226 entkoppelt ist und daher relativ zum Antriebselement 226 verschiebbar ist. Zum Verschwenken des Hakens 20 in die zweite Stellung wird der Haken im Bereich seines freien Endes angehoben. Ein Moment um die Schwenkachse 58 wird dadurch hervorgerufen, welches die Verschwenkung des Hakens 20 bewirkt. Die Verschwenkung des Hakens ist begrenzt durch den Anschlag des Vorsprungs 62 an dem Absatz des zweiten Schenkels 48. Ferner wird der Flächenkontakt zwischen dem Haken 20 und dem Zahnrad 236 in der zweiten Stellung aufgehoben, so dass das Zahnrad 236 zur Rotation freigegeben wird.

In der zweiten Stellung wird das Federelement 51 durch den Vorsprung 62 zusammengedrückt, jedoch nur soweit, dass es nicht komplett innerhalb der Bohrung eingedrückt wird. Der Befestigungsabschnitt 132 bleibt sowohl in der ersten, als auch in der zweiten Stellung des Hakens unverändert. Nachdem der Haken 20 in seine zweite Stellung verstellt wurde, wird der Haken 20 zusammen mit dem Befestigungsabschnit 132 bis zum Anschlag 40 entlang des Antriebselements verschoben und an diesem ausgerichtet. Anschließend wird der Haken 20 wieder in seine erste Stellung zurück verstellt, indem der Haken losgelassen wird. Die Federdruckkraft des Federelements 51 bewirkt, dass der Haken wieder in seine erste Stellung zurück verschwenkt wird, und mit seiner Nut 50 in den unteren Abschnitt des Antriebselements 226 eingreift. Das permanent auf den Haken 20 wirkende Moment durch die Federdruckkraft bewirkt, dass der die Aufhängevorrichtung 118 zangenartig durch die beiden Nuten 50 und 52 an dem Antriebselement 226 befestigt bleibt und eine sichere Kraftübertragung vom Antriebselement 226 auf die Aufhängevorrichtung 118 gewährleistet ist.

In der ersten Stellung des Hakens 20 wird das Antriebselement 226 um eine definierte Sollstrecke weiter verfahren. Die Wiederholung der bisher genannten Verfahrensschritte mit einem weiteren Haken führt dazu, dass eine Reihe von Haken 20 entlang des Antriebselements 226 in den definierten Abschnitten aneinander gereiht befestigt werden.

Haken 20 können also zusammen mit dem Befestigungsabschnitt 132 von dem Antriebselement 226 der Führungs- und Antriebseinrichtung entnommen oder dem Antriebselement 226 hinzugefügt werden. Man erreicht eine schnelle und einfache Bestückung der Führungs- und Antriebseinrichtung mit der gewünschten Anzahl von Haken 20 zum Aufhängen der Wurstkette.

## Patentansprüche

1. Vorrichtung zum Aufhängen von Würstchenketten (12) in Schlaufen, mit einer Führungs- und Antriebseinrichtung zum Führen und Antreiben von Haken (20) entlang einer Bewegungsbahn, welche ein antreibbares, umlaufendes Antriebselement (26; 126) zur beabstandeten Aufnahme und zum Antreiben mehrerer Haken (20) aufweist, und mit mehreren mit dem Antriebselement (26; 126) koppelbaren Haken (20) zum Tragen einer Schlaufe der Würstchenkette (12),
**gekennzeichnet durch** eine Einrichtung (13) zum stufenlosen Fixieren der Haken (20) in verschiedenen Abständen zueinander an dem Antriebselement (26; 126).

2. Aufhängevorrichtung nach Anspruch 1,
**dadurch gekennzeichnet, dass** die Einrichtung (13) zum stufenlosen Fixieren ein an einem Haken (20) drehbar gelagertes Zahnrad (36) aufweist, dessen Zähne mit korrespondierenden Ausnehmungen in dem Antriebselement (26; 126) in Eingriff stehen und welches an einer Drehung durch eine Feststelleinrichtung gehindert werden kann.

3. Aufhängevorrichtung nach Anspruch 2,
**dadurch gekennzeichnet, dass** das einem Haken (20) zugeordnete Zahnrad (36) an einem Befestigungsabschnitt (32) des Hakens (20) drehbar gelagert ist und die Drehachse des Zahnrades (36) im montierten Zustand im Wesentlichen vertikal angeordnet ist.

4. Aufhängevorrichtung nach Anspruch 3,
**dadurch gekennzeichnet, dass** die Feststelleinrichtung einen mit einem Zahnrad (36) kooperierenden Bolzen (38) aufweist, welcher ein Gewinde aufweist und mittels einer Mutter an einem Befestigungsabschnitt (32) eines Hakens (20) fixierbar ist.

5. Aufhängevorrichtung nach Anspruch 4,
**dadurch gekennzeichnet, dass** der Befestigungsabschnitt (32) eines Hakens (20) in einer Seitenansicht im Wesentlichen U-förmig ist, und dass die freien Schenkel des U-förmigen Abschnitts mit einer Führungsschiene (24) der Führungs- und Antriebseinrichtung zusammenwirken, um die Haken (20) entlang ihrer Bewegungsbahn führen zu können.

6. Aufhängevorrichtung nach Anspruch 5,
**dadurch gekennzeichnet, dass** die Führungsschiene (24) mindestens ein im Wesentlichen vertikal angeordnetes Blech aufweist, entlang welchem die Haken (20) gleiten können.

7. Aufhängevorrichtung nach mindestens einem der vorstehenden Ansprüche,
**dadurch gekennzeichnet, dass** das umlaufende Antriebselement als Zahnriemen (26) oder Kette (126) ausgebildet ist und das Zahnrad (36) mit Zähnen des Zahnriemens (26) bzw. Ausnehmungen in der Kette (126) formschlüssig in Eingriff steht.

8. Aufhängevorrichtung nach einem der vorstehenden Ansprüche,
**dadurch gekennzeichnet, dass** sich an dem Befestigungsabschnitt (32) eines Hakens (20) ein Aufhängeabschnitt (30) zum Überhängen einer Würstchenkette (12) anschließt.

9. Aufhängevorrichtung (118) nach mindestens einem der vorstehenden Ansprüche,
**dadurch gekennzeichnet, dass** der Haken (20) beweglich ist, so dass der Haken (20) in Bezug auf das Antriebselement (26, 126, 226) in mindestens zwei Stellungen verstellbar ist.

10. Aufhängevorrichtung (118) nach Anspruch 9,
**dadurch gekennzeichnet, dass** der Haken (20) um eine Achse schwenkbar an einem Befestigungsabschnitt (132) gelagert ist, die vorzugsweise im Wesentlichen parallel zum Antriebselement (26, 126, 226) verläuft.

11. Aufhängevorrichtung (118) nach den Ansprüchen 9 und 10,
**dadurch gekennzeichnet, dass** der Haken (20) in einer ersten Stellung fest mit einem ersten Abschnitt des Antriebselements (26, 126, 226) gekoppelt ist und in eine zweite Stellung bewegbar oder schwenkbar ist, in welcher der Haken (20) von dem Antriebselement (26, 126, 226) entkoppelt und relativ zu diesem verschiebbar ist.

12. Aufhängevorrichtung (118) nach einem der Ansprüche 9-11,
**dadurch gekennzeichnet, dass** der Haken (20) in der ersten Stellung die Drehung eines an dem Befestigungsabschnitt (32) drehbar gelagerten Zahnrades (236) verhindert und in der zweiten Stellung die Drehung des Zahnrades (236) freigibt.

13. Aufhängevorrichtung (118) nach mindestens einem der vorstehenden Ansprüche,
**dadurch gekennzeichnet, dass** der Haken (20) an einem Anschlag (40) ausrichtbar ist.

14. Aufhängevorrichtung (118) nach Anspruch 13,
**dadurch gekennzeichnet, dass** der Anschlag (40) in eine Position verfahrbar ist, in der der Haken (20) an dem Anschlag (40) ausrichtbar ist oder der Anschlag (40) so positioniert ist, dass der Haken (20) in der zweiten Stellung an dem Anschlag (40) ausrichtbar ist.

15. Verfahren zum Einstellen einer Vorrichtung zum Aufhängen von Würstchenketten, welche eine Führungs- und Antriebseinrichtung zum Führen und Antreiben von Haken (20) entlang einer Bewegungsbahn mit einem umlaufenden Antriebselement (26, 126, 226) zur beabstandeten Aufnahme von Haken (20) und mehrere mit dem Antriebselement (26, 126, 226) koppelbare Haken (20) zum Tragen einer Schlaufe einer Würstchenkette oder dergleichen aufweist, **gekennzeichnet durch** die Verfahrensschritte:
a) Positionieren eines Anschlags (40) in einer Referenzposition,
b) Verstellung eines Hakens (20) in eine zweite Stellung, in welcher der Haken (20) von dem Antriebselement (26, 126, 226) entkoppelt und relativ zum Antriebselement (26, 126, 226) verschiebbar ist,
c) Verschieben des Hakens (20) bis zum Anschlag (40),
d) Verstellen des Hakens (20) in eine erste Stellung, in welcher der Haken fest mit dem Antriebselement (26, 126, 226) gekoppelt ist, und
e) Verfahren des Hakens (20) in Antriebsrichtung um eine Sollstrecke vorbei am Anschlag (40).

16. Verfahren nach Anspruch 15,
**dadurch gekennzeichnet, dass** der Anschlag (40) mittels einer Steuerungs- und Antriebseinrichtung automatisch in die Referenzposition verfahrbar ist.

17. Verfahren nach Anspruch 15 und/oder 16,
**gekennzeichnet durch** Entnahme überzähliger Haken (20) von der Führungs- und Antriebseinrichtung nach Verstellung des Hakens (20) in die zweite Stellung,
oder **durch** Hinzufügen fehlender Haken (20) an das Antriebselement (26, 126, 226) in der zweiten Stellung.

18. Verfahren nach einem der Ansprüche 15-17 ,
**gekennzeichnet durch** Wiederholung der Verfahrensschritte des Anspruchs 15 oder 17 für weitere Haken (20).
